# EUROPEAN PATENT APPLICATION

(11) **EP 0 774 406 A1**
(43) Date of publication of application: **21.05.1997**
(21) Application number: 96830514.4
(22) Date of filing: 09.10.1996
(51) Int. Cl.: B62K 25/28

(54) **Bicycle frame with elastic suspension for the rear wheel**

(30) Priority: 20.10.1995 IT TO950858
(71) Applicant: Telai Olagnero Sas di Olagnero Vittorio & C., 12020 Roccabruna (Cuneo) (IT)
(72) Inventor: Cavallo, Adriano, 12020 Cuneo (IT)
(74) Representative: Notaro, Giancarlo

(57) **Abstract**

A bicycle frame comprises a fork (11) for supporting the rear wheel (R) which is pivotally mounted to the frame main structure (2) around a transverse axis (17), arranged immediately behind the housing (8) of the crank axle. The fork (11) is further provided at its upper end with two parallel plates (14) connected to each other by a transverse pin (15) with a cam-type locking device which is guided within two arched slots (16) formed in two side walls (3) of a main beam (2) of the frame. A helical spring (21) is interposed between the main beam (2) of the frame and the structure of fork (11) to bias the latter towards an end position corresponding to the most lowered position of the rear wheel (R) of the bicycle with respect to the frame main structure.

## Description

The present invention relates to bicycle frames, of the type comprising a main frame structure including a tubular beam having one end connected to a steering tube and the opposite end connected to a saddle supporting tube which on its turn is connected at its lower end to a crank axle housing.

The object of the present invention is that of providing a frame of the above indicated type which is provided with an elastic suspension of the rear wheel which insures a great comfort and an easy control on the bicycle, even at high speed and on uneven ground while having a relatively simple and reliable structure.

In view of achieving these objects, the invention provides a bicycle frame of the type indicated in the foregoing, characterized in that said frame has a fork supporting the rear wheel of the bicycle which forms part of an auxiliary structure, separated from said main structure of the frame, which is pivotally mounted around a transverse axis on said main structure adjacent to said housing of the crank axle and is further connected to said main beam by means of pin-and-slot coupling means able to guide oscillation movement of the auxiliary structure with respects to the main structure around said transverse axis, between two end positions, respectively corresponding to the most lifted position and the most lowered position of the rear wheel of the bicycle with respect to the frame main structure, spring means being interposed between said main structure and said auxiliary structure for biasing the latter towards the end position corresponding to the most lowered position of the rear wheel.

In a preferred embodiment, said main beam has, at the area engaged by the saddle supporting tube, a quadriangular cross-section, so as to have two planner parallel side walls, and said auxiliary structure comprises a pair of plates which extend from the upper end of the fork and are arranged on the two sides of said main beam and are connected to each other by a transverse pin which is guided within two arched slots formed in the side walls of said main beam.

Yet in said preferred embodiment. to the upper end of the fork there is also connected an auxiliary beam which extends downwardly and has its lower end pivotally mounted around said transverse axis on said main structure, immediately behind the housing of the crank axle.

Yet in said preferred embodiment, the spring means are preferably constituted by a helical spring interposed between an abutment surface formed on the upper end of the fork and an abutment surface formed on the saddle supporting tube, said helical spring extending into the gap between said plates carrying the transverse pin which is guides within the arched slots of the main beam.

Due to the above described features, the frame according to the invention provides for the elastic suspension of the rear wheel of the bicycle with simple and reliable means. Due to the position of the oscillation axis of the fork adjacent to the housing of the crank axle, best operation of the suspension during travel of the bicycle is obtained, the so called "kangaroo" effect being totally absent.

The invention is applicable particularly to "mountain-bikes", but naturally it is also applicable to any other type of bicycle.

Further features and advantages of the invention will become apparent from the description which follows with reference to the annexed drawings, given purely by way of non-limiting example, in which:
figure 1 is a side view of a frame according to the invention, which shows also the rear wheel of the bicycle mounted thereon,
figure 2 is an exploded perspective view of the frame of figure 1,
figure 3 is a view at an enlarged scale and partially in cross-section of a detail of figure 1, and
figure 4 is across-sectional view taken along line IV-IV of figure 1, at an enlarged scale.

In the drawings, numeral 1 generally designates a bicycle frame comprising a main beam 2 having a quadriangular cross-section, or similar, (figure 4) with two side walls 3, an upper wall 4 and a lower wall 5. The main beam 2 has one end rigidly connected to a steering tube 6 and the opposite end rigidly connected to a saddle supporting tube 7. In the illustrated example, the frame is of the type with no horizontal tube, with the main beam 2 which extends along a diagonal downwardly, starting from the steering tube 6, up to the saddle supporting tube 7. The saddle supporting tube 7 is rigidly connected at its lower end to a housing 8 of the crank axle and there are further provided reinforcing elements 9, 10 which connect the main beam 2 to the saddle supporting tube 7 and the housing 8.

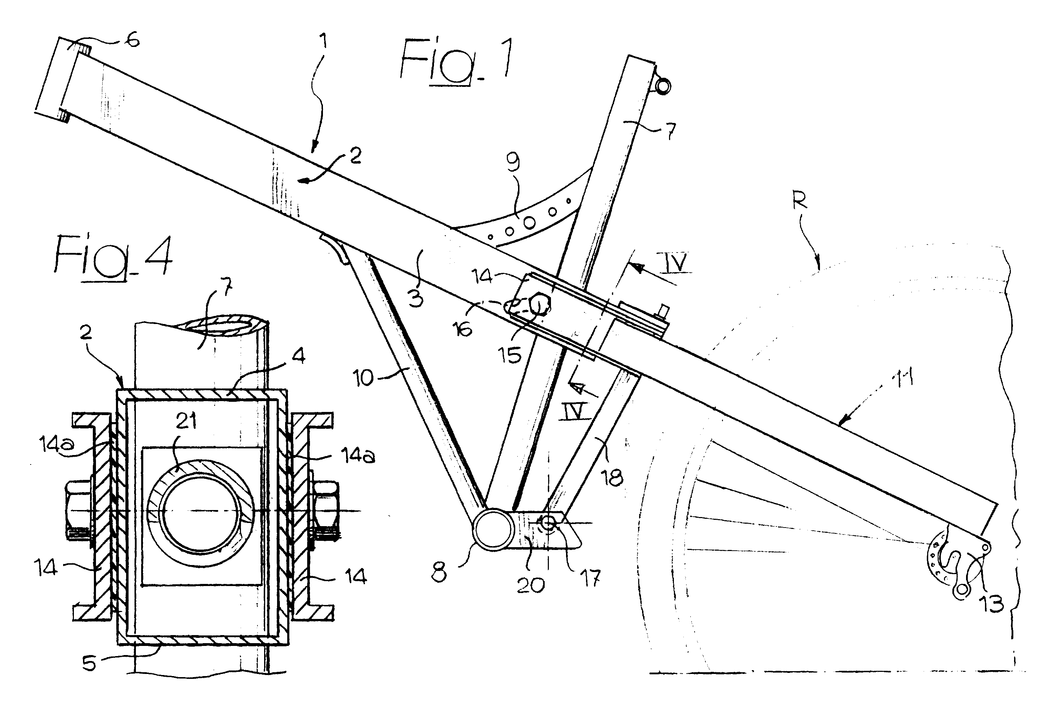

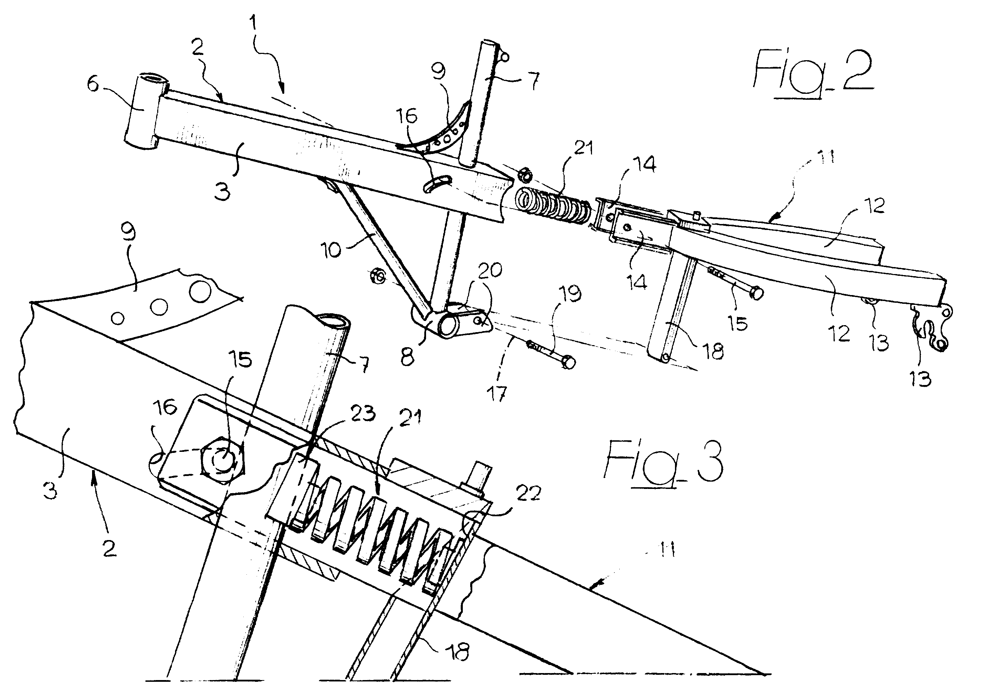

With reference also to figure 2, numeral 11 generally designates a fork having fork portions 12 provided at their ends with fork-shaped attachments 13 for mounting a rear wheel R (figure 1). At its upper end, from which portions 12 extend, the fork 11 has two parallel plates 14 which are arranged at the two sides of the main beam 2, in sliding contact with the side walls 3 of the latter. In order to decrease the sliding friction, each plate 14 is provided on its inner side with a coating 14a of a material with a low friction coefficient, such as Teflon (registered trademark). The two plates 14 are connected to each other by a bolt 15 constituting a transverse pin which on its turn is guided within two arched slots 16 formed in the side walls 3. Preferably, bolt 15 is associated with a locking device of the lever and offset pin type (not shown) which is conventionally used in bicycles, enabling to decrease or increase rapidly the friction between plates 14 and beam 2, according to the needs the cyclist. In this manner, slots 16 guide the structure of fork 11 along its oscillation movement around the articulation axis 17. The fork 11 is indeed provided with a further beam 18, projecting downwardly from its upper end, whose lower end is articulated around axis 17, by means of a bolt 19, on two parallel plates 20 projecting rearwardly from housing 8 and welded thereto. In this manner, the fork 11 constitutes an auxiliary structure, separated from the main frame structure, constituted by the beam 2, which is pivotally mounted to the main structure around said transverse axis 17 and is therefore guided along its oscillation movement by the slots 16 (which therefore have a curved path with centre on axis 17). A helical spring 21 is arranged in the gap between the two plates 14, with one end abutting against a stop surface 22 formed on the upper end of fork 11 and the opposite end abutting against a projection 23 of the saddle supporting tube 7. Spring 21 tends to hold fork 11 in an end position, defined by the engagement of the transverse pin 15 against one end of each arched slot 16, corresponding to the most lowered position of the rear wheel R with respect to the frame. Starting from this end position, fork 11 can be caused to oscillate in an anti-clockwise direction (with reference to figure 1) around axis 17, until it reaches an end position, defined by the engagement of the transverse pin 15 against the opposite end of each arched slot 16, which corresponds to the most lifted position of the rear wheel R with respect to the frame.

Therefore, during travel of the bicycle, wheel R is able to move elasticity between said end positions so as to improve the travel comfort for the cyclist, by greatly absorbing the stresses due to unevenness and roughness of the ground. As clearly apparent from the foregoing description, the frame structure according to the invention is characterized by simplicity and reliability. The pivotal connection of the rear fork 11 to the housing of the crank axle 8 by means of beam 18 enables the cyclist, whatever is his attitude on the pedals, both when climbing and on down-hill, and whatever is the degree of unevenness of the ground, to completely avoid the annoying "kangaroo" effect which takes place in the known suspension systems.

Naturally, while the principle of the invention remains the same, the details of construction and the embodiments may widely vary with respect to what has been described and illustrated purely by way of non-limiting example, without departing from the scope of the present invention.

## Claims

1. Bicycle frame, comprising:
- a main structure (2) including a tubular beam (2) having one end connected to a steering tube (6) and the opposite end connected to a saddle supporting tube (7) which on its turn is connected at its lower end to a housing (8) of the crank axle,
characterized in that it comprises a fork (11) supporting the rear wheel (R) of the bicycle, which forms part of an auxiliary structure separated from said main structure (2), which is pivotally mounted around a transverse axis (17) to said main structure (2) adjacent to said housing (8) of the crank axle and is further connected to said main beam (2) by means of pin-and-slot coupling means (15, 16) able to guide the oscillation movement of the auxiliary structure (11) with respect to the main structure (2) around said transverse axis (17) between two end positions, respectively corresponding to the most lifted position and the most lowered position of the rear wheel (R)of the bicycle with respect to frame main structure (2), spring means (21) being interposed between said main structure (2) and said auxiliary structure (11) to bias the latter towards an end position, corresponding to the most lowered position of the rear wheel.

2. Bicycle frame according to claim 1, characterized in that the main beam (2) has, adjacent to the saddle supporting tube (7), a quadriangular cross-section, so as to have two planner parallel side walls (3) and said auxiliary structure (11) comprises a pair of plates (14) which extend from the upper end of the fork (11) and are arranged at the two sides of said main beam (2) and are connected to each other by a transverse pin (15) which is guided within two arched slots (16) formed in the side walls (3) of said main beam (2).

3. Bicycle frame according to claim 2, characterized in that to the upper end of the fork (11) there is also connected a beam (18) extending downwardly which has its lower end pivotally mounted around said transverse axis (17) to said main structure (2), immediately behind the housing (8) of the crank axle.

4. Bicycle frame according to claim 2, characterized in that said spring means are constituted by a helical spring (21) arranged in the gap between said parallel plates (14) and having its ends in contact with a stop surface (22) formed on the upper end of the fork (11) and a stop surface (23) formed on the saddle supporting tube (7).

5. Bicycle frame according to claim 2, characterized in that to said transverse pin (15) there is associated a locking device with an offset pin, for varying the friction between said plates (14) and said main beam (2).
